# EUROPEAN PATENT APPLICATION

(11) **EP 4 702 897 A1**
(43) Date of publication of application: **04.03.2026**
(21) Application number: 24796463.8
(22) Date of filing: 12.01.2024
(51) Int. Cl.: A47J 37/06, F23D 14/10, F24C 3/02

(54) **CERAMIC COOKING DEVICE**

(30) Priority: 27.04.2023 JP 2023073634
(71) Applicant: Rinnai Corporation, Nagoya-shi, Aichi 454-0802 (JP)
(72) Inventor: HAYASHI Shusaku, Nagoya-shi, Aichi 454-0802 (JP); HAYASHI Tatsuyuki, Toyota-shi, Aichi 471-8571 (JP); TAKAHASHI Kenji, Toyota-shi, Aichi 471-8571 (JP); NAKAJIMA Tetsuya, Toyota-shi, Aichi 471-8571 (JP); KATAOKA Takao, Toyota-shi, Aichi 471-8571 (JP); YAMAGUCHI Hiroyuki, Tokyo 103-0022 (JP)
(74) Representative: Haseltine Lake Kempner LLP
(86) International application number: PCT/JP2024/000619
(87) International publication number: WO 2024/224703

(57) **Abstract**

A grill-cooking apparatus including a burner causing hydrogen gas to combust, and a food mounting part provided above the burner, the grill-cooking apparatus being capable of grill-cooking both in the state where moistness of the surface is given and in the state where crispness of the surface is given, with good cookability. In the grill-cooking apparatus, an introduction-position variable device is provided, which changes an introduction position of secondary air supplied to the burner. In a case where a case is provided that surrounds a portion of the burner, which is located below the food mounting part, and extends downward, the closure-changing plate is configured to be capable of closing the lower-end opening of the case.

## Description

### TECHNICAL FIELD

The invention relates to a grill-cooking apparatus with which a burner and a food mounting part mounted above the burner are provided.

### BACKGOUND ART

Among this kind of the grill-cooking apparatus, there is known in Patent Document No. 1, for example. The grill-cooking apparatus in question is provided with a burner in which a plurality of flame holes are opened spaced apart in a longitudinal direction of a pipe-shaped burner main body of one end is closed, and forms a flame by combustion of hydrogen gas supplied through a nozzle fitted to the other open end of the burner main body and ejected from each of the flame holes, so that grill-cooks food such as meat or fish mounted on a food mounting part is grill-cooked.

Here, it is known that hydrogen combustion gas generated by causing hydrogen to combust has a higher water vapor content per unit heat than combustion gas generated by causing hydrogen carbonate to combust. Therefore, if the hydrogen combustion gas is caused to directly come into contact with the food, while excessive a fat component is washed way by moisture contained in a hydrogen combustion gas, it will be possible to grill-cook in a state where the moisture amount in a surface of the food is great and moistness is given. On the contrary, there will be a problem that it is difficult to grill-cook in a state where the moisture amount in the surface is little and crispness is given. Therefore, in a case where crispness is required for grill-finishing, a grilling-surface process using a portable type of a torch burner is necessary, leading to significant deterioration in cookability.

### PRIOR ART

### PATENT DOCUMENT

Patent Document No.1: JP2012-42068 A

### SUMMARY OF INVENTION

### PROBLEM THAT THE INVENTION IS TO BE SOLVED

The invention has been made in view of the above-mentioned point and has a problem of providing a grill-cooking apparatus that is capable of grill-cooking both in the state where moistness of the surface is given and, in the state, where crispness of the surface is given, with good cookability.

### MEANS FOR SOLVING THE PROBLEM

In order to solve the above-mentioned problem, the invention provides a grill-cooking apparatus GR, comprising: a burner 4 causing hydrogen gas to combust; and a food mounting part 2 provided above the burner, characterized in that: an introduction-position variable device (6) is provided for changing the introduction position of secondary air supplied to the burner.

According to the invention, the amount of secondary air in each part of the burner can be changed by changing the introduction position of the secondary air with the introduction-position variable device. Then, in a portion of the burner in which the supply amount of the secondary air is great, grill-cooking in a state where moistness of a surface is given is possible, while excessive fat content is washed away by moisture largely contained in a hydrogen combustion gas. On the other hand, in a portion in which the supply amount of the secondary air is little, since a flame seeks the secondary air and extends upward, thereby strongly heating food, grill-cooking in a state where the moisture amount in the surface is little and crispness is given is possible. Meanwhile, it was confirmed that, even though the supply amount of the secondary air was little, combustion stability is not lost, and that appropriately baked aroma and color were also given by grilling the food with the flame extending upward. Thus, in the invention of the application, the grill-cooking is possible both in the state where moistness of the surface is given and in the state where crispness of the surface is given only by changing the introduction position of the secondary air.

In the invention, in a case where a case 13 is provided that surrounds a portion of the burner, which is located below the food mounting part, and extends downward, and the introduction-position variable device may be configured by a closure-changing plate 6 mounted on a lower-end opening 13b of the case so as to be capable of changing a closed region in the lower-end opening. According to this, the introduction position can be changed only by changing the closed region of the lower-end opening, which is advantageous. In should be noted that at the time of combustion in the burner, the secondary air is also taken from the lower-end opening, then, the burner and the case are cooled by the secondary air flowing inside the case. However, since a cooling effect of the burner and the case is reduced in the portion, in which the supply amount of the secondary air is little, of the burner, an atmospheric temperature around the burner becomes high compared to the portion, in which the supply amount of the secondary air is great, of the burner. Therefore, since the food is also heated by radiating heat, the grill-cooking in a state where crispness and baked aroma and color are further given is possible.

In addition, in the invention, it is preferable that a partition plate 7 is provided, which divides a space inside the case into a plurality of small spaces extending in perpendicular direction, and that the closure-changing plate is configured to be capable of closing the lower-end opening of the case, which leads to any of the small spaces. This causes to clearly divided a surface of the single food mounting part into a region in which the grill-cooking in the state where the moistness of the surface is given is possible and a region in which the grill-cooking in the state where the crispness of the surface is given is possible, allowing for improving adjustability.

### BRIEF DESCRIRTION OF THE DRAWINGS

FIG. 1 is a perspective view of a grill-cooking apparatus of an embodiment of the invention.
FIG. 2 is a cross-section along a II-II line of FIG. 1.
FIG. 3 is a cross-section along a III-III line.
FIG. 4 is a plane view of the grill-cooking apparatus shown in FIG. 1.
FIG. 5A, 5B, 5C are plane views showing a closure-changing plate with different closed regions, respectively.
FIG. 6 is a perspective view of a grill-cooking apparatus provided with a closure-changing plate as to a modified example.

### MODES FOR CARRYING OUT THE INVENTION

With reference to the figures, description will be made of an embodiment of a grill-cooking apparatus GR by way of an example in which a burner is the pipe-shaped one. It should be noted that" hydrogen" referred to in the invention is not limited to pure hydrogen, but includes cases, for example, hydrogen gas is contained in a proportion of 40 % or more, and a small amount of odorant is added to hydrogen gas.

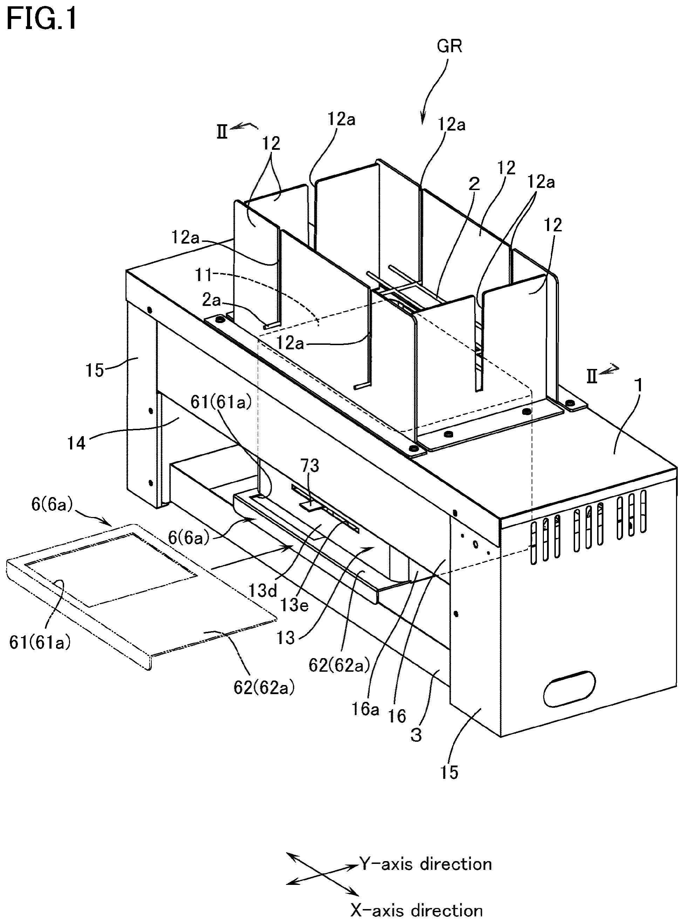

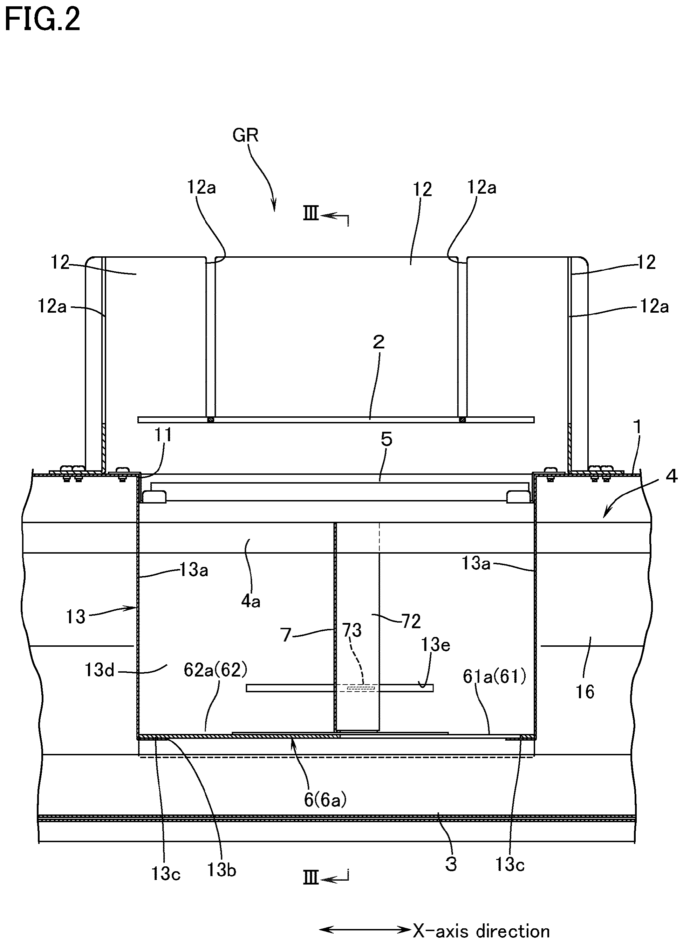

With reference to FIGS. 1 to 3, provided that two horizontally orthogonal directions are defined as an X-axis direction and a Y-axis direction, respectively, in the grill-cooking apparatus GR has a top plate that is longitudinal in the X-axis direction and has a rectangular shape when viewed in a plane. An opening 11 that is longitudinal in the X-axis direction and has a rectangular shape when viewed in a plane is formed in a central part of the top plate 1. Four hood plates 12 are provided and stand in a manner to surround the opening 11 at an upper surface of the top plate 1 so that excessive secondary air is not supplied to a below-described burner 4 from above the burner 4. A plurality of slits 12a extending downward from an upper end are formed in each of the hood plates 12. Then, a gridiron 2 as a food mounting part is located above the opening 11 and is mounted. A supporting rod part 2a is provided on and protrudes from the gridiron 2, which is to be inserted into the slits 12a of the hood plates 12 on both sides in the Y-axis direction. The gridiron 2 is supported at a lower end of the slits 12a through the supporting rod part 2a and is freely taken out upward by leading to the slits 12a.

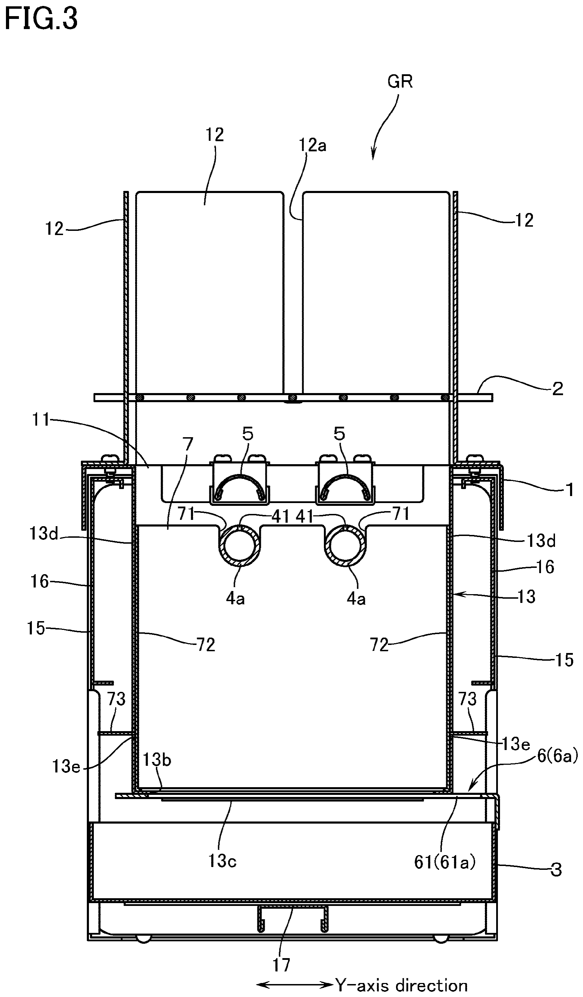

A case 13 extending downward from an inner-edge part of the opening 11 and opened in a lower surface thereof is suspended from the top plate 1. The case 13 incudes a portion of a straight-pipe part 4a of the burner 4, which is located below the gridiron 2. A pair of supporting plates 14 with a heat-insulating property are provided on an-outer-side of side walls 13a, 13a of the case 13, which are located on both sides in the X-direction, respectively. Storage boxes 15, 15 are attached to each of the supporting plates 14, 14, and both sides of the top plate 1 in the X-axis direction are supported by these supporting plates 14 and the storage boxes 15, 15. In one of the storage boxes 15, although not described by specific illustration, known parts necessary to cause the burner 4 to combust, such as a valve unit including a gas cock for hydrogen which is operated by an operation knob (not shown) provided on an outer surface of the storage box 15, an ignitor and a controller are stored, respectively. In addition, between both the supporting plates 14,14, a drip tray 3 is stored on a lower-side spaced apart from a lower end of the case 13, which is freely drawn forward and inserted backward in the Y-axis direction. It should be noted that a mark 16 in FIG. 1 represents a heat-insulating plate mounted so as to bridge between each of the support plates 14, 14, and a mark 17 in FIG. 3 represents a supporting stand of the drip tray 3. Then, the burner 4 is provided by inserting into a through-hole (not shown) that is formed in each of the side walls 13a, 13a.

The burner 4 is a pipe-shaped one in which two straight-pipe parts 4a, 4a that are longitudinal in the X-axis direction and are arranged in parallel in the Y-axis direction. In a portion of each of the straight-pipe parts 4a, 4a, which is located inside the case 13 and faces the opening 11, a large number of flame holes 41 opened upward are formed and spaced apart in the X-axis direction. Although not described with a specific illustration, a nozzle is fixed to one end of each of the straight-pipe parts 4a, 4a protruding inside one of the storage box 15 through the side wall 13a on one side in the X-axis direction and the supporting plate 14. Hydrogen is supplied to each of the straight-pipe parts 4a, 4a through the nozzle so that the hydrogen ejected from the flame holes 41 is caused to diffuse and combust. Infrared radiation members 5, 5 curved upward in a convex and arcuate shape are supported by the side walls, 13a, 13a, respectively, and provided above each of the straight-pipe parts 4a, 4a. Food (not shown) mounted on the gridiron 2 is grill-cooked by infrared radiation from the infrared radiation members 5, 5 when the infrared radiation members 5, 5 are caused to heat in a red-hot state by a flame formed by combustion of the hydrogen ejected from each of the flame holes 41. At that time, a hydrogen combustion gas by combusting the hydrogen gas pours out from below the infrared radiation members 5, 5 and rises. The rising hydrogen combustion gas contributes to heating the food mounted on the gridiron 2 and can wash away a fat component and a salt component by coming into contact with the food.

As above-mentioned, since the fat component and the salt component are washed away by the contact of the hydrogen gas with the food, grill-cooking in a state where the moisture amount in surface is great and moistness is given is possible. On the contrary, grill-cooking in a state where the moisture amount in the surface is little and crispness is given is difficult. Therefore, it is desirable that the grill-cooking both in the state where moistness of the surface is given and, in the state, where crispness of the surface is given are caused to be possible in the single grill-cooking apparatus GR. Then, an introduction-position variable device is provided, which changes an introduction position of secondary air supplied to the burner 4, and the introduction-position variable device is configured by a closure-changing plate 6 mounted on a lower-end opening 13b of the case 13 so as to be capable of changing a closed region in the lower-end opening13b.

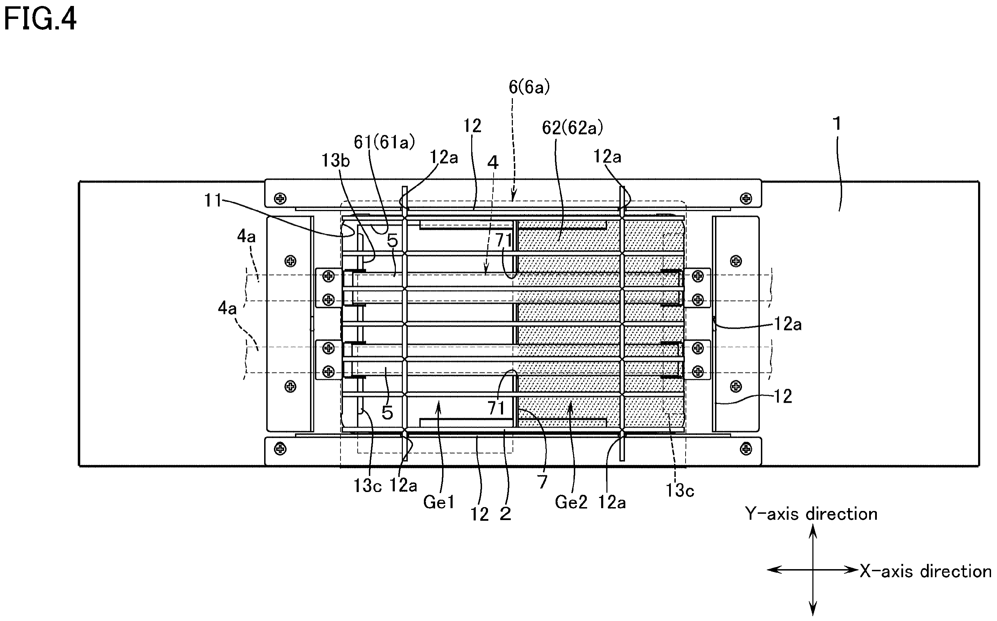

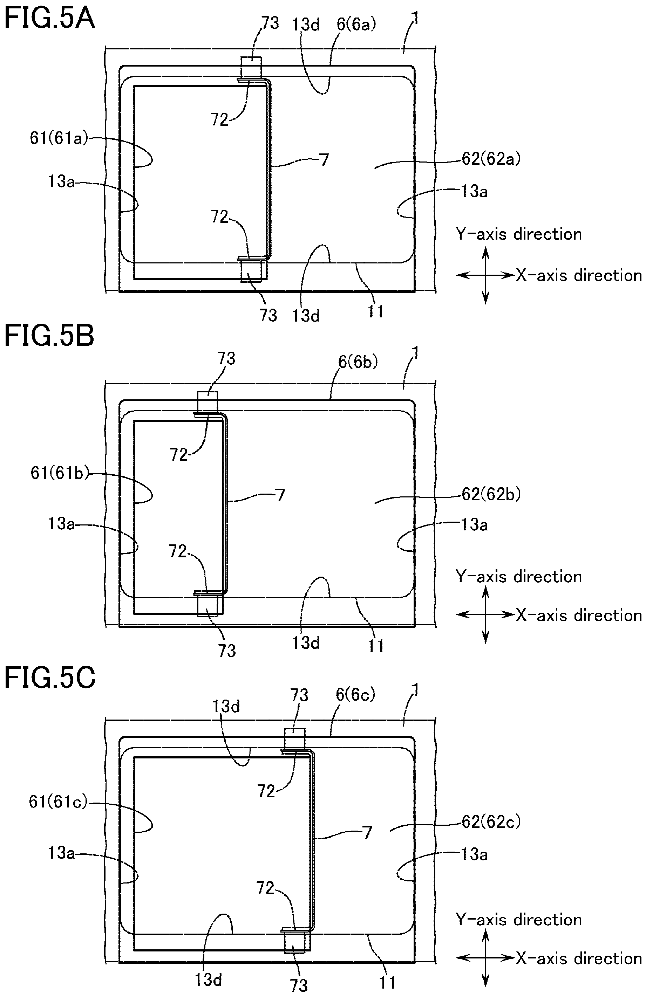

With reference also to FIG. 4, FIG. 5, the closure-changing plate 6 is configured by a plate-like member in a rectangular shape when viewed in a plane, which has a length in the X-axis direction equal to the opening 11 and a width in the Y-axis direction equal to the drip tray 3. In the closure-changing plate 6, an introduction opening allowing the secondary air to be introduced is opened, and a closed region 62 of the lower-end opening 13b is configured by a portion, at which no introduction opening 61 exists, of the closure-changing plate 6. In the embodiment, as the closure-changing plate 6, three types having different closure regions for the lower opening 13b are used: a first closure-changing plate 6a (see FIG. 5A), in which a rectangular introduction opening 61a when viewed in a plane is opened so that a region of approximately one-half in the X-axis direction from one end of each of the straight pipe portions 4a, 4a inside the case 13 faces the introduction opening; a second closure-changing plate 6b (see FIG. 5B), in which a rectangular introduction opening 61b when viewed in a plane is opened so that a region of approximately one-third in the X-axis direction from the above-mentioned one end faces the introduction opening; and a third closure-changing plate 6c (see FIG. 5C), in which a rectangular introduction opening 61c when viewed in a plane is opened so that a region of approximately two-thirds in the X-axis direction from the above-mentioned one end faces the introduction opening. A region extending from one end to approximately two-thirds in the X-direction of the above-mentioned portion is opposite the introduction opening 61c. Then, a pair of guide-supporting plates 13c, 13c extending in the Y-axis direction are formed on an inner surface of a lower end of the respective side wall 13a located on both sides of the case 13 in the X-axis direction, respectively. Each of the first, second, and third closure-changing plates 6a, 6b, and 6c is insertable and removable in the Y-axis direction, guided by the pair of guide-supporting plates 13c, 13c, allowing the first, second, and third closure-changing plates 6a, 6b, and 6c to be mounted interchangeably.

Inside the case 13, a partition plate 7 is mounted, which divides into a plurality of small spaces that extend perpendicularly in an inner space. In the embodiment, two small spaces are arranged in parallel in the X-axis direction by the single partition plate 7. A notch 71 receiving the respective straight-pipe part 4a is formed at an upper end of the partition plate 7. In addition, on both sides of the partition plate 7 in the Y-axis direction, a slide-plate part 72 is formed, which comes into contact with side plates 13d, 13d of the case 13 that are located on both sides in the Y-axis direction. Tongue pieces 73, 73 are provided with the slide-plate part 72 and protrude outward, respectively. Then, a slit 13e that is longitudinal in the X-axis direction and into which each of the tongue pieces 73, 73 is introduced is formed in the side walls 13d, 13d of the case 13. A position of the partition plate 7 in the X-axis direction inside the case 13 can be arbitrarily changed by displacing each of the tongue pieces 73, 73 in the X-axis direction along the slit 13e. As illustrated in FIG. 4, in a state where the first closure-changing plate 6a is mounted on the lower-end opening 13b of the case 13, and the partition plate 7 is located at an intermediate position in the X-axis direction, portions at approximately half in the X-axis direction of the straight-pipe parts 4a, 4a are opposite the closure region 62a, while the remaining portions of the straight-pipe parts 4a, 4a are opposite the introduction opening 61a. Accordingly, during the combustion in the burner 4, the amount of the secondary air directed to the flame formed by the combustion of the hydrogen gas ejected from each of the flame holes 41 can be reduced in the portions of the straight-pipe parts 4a, 4a that are opposite the closure region 62a, compared to in the portions of the straight-pipe parts 4a, 4a that are opposite the introduction opening 61a.

According to the foregoing embodiment, when the food mounted on the gridiron 2 is grill-cooked, the supply amount of the secondary air supplied to the portions of the straight-pipe parts 4a is little at a region Ge1 (a dotted region shown in FIG. 5), located approximately halfway in the X-axis direction of the gridiron 2, where the amount of the secondary air is reduced, whereby the flame seeks the secondary air and extends upward, and the food is strongly heated. This enables grill-cooking of the food in a state where crispness of a surface is given. At this time, since a cooling effect by the secondary air at the portions of the straight-pipe parts 4a, 4a and inside the case 13 is reduced, atmospheric temperature at the portions of the straight-pipe parts 4a, 4a becomes high compared to the remaining region Ge2, located approximately halfway in the X-axis direction of the gridiron 2. Therefore, the grill-cooking is possible in a state where crispness and baked aroma and color are further given by heating the food by radiating heat. Meanwhile, it was confirmed that, even though the supply amount of the secondary air was little, combustion stability is not lost. On the other hand, in the region Ge1 of the gridiron 2, grill-cooking in a state where moistness of a surface is given is possible, while excessive fat content is washed by moisture largely contained in the hydrogen combustion gas.

According to the foregoing grill-cooking apparatus GR, the surface of the single gridiron 2 is divided into the regions Ge1, Ge2, and grill-cooking is possible both in the state where moistness of the surface is given and, in the state, where crispness of the surface is given is possible. Then, only by interchanging the closure-changing plates 6a, 6b, and 6c, which are mounted on the lower-end opening 13b of the case 13, and by changing the position of the partition plate 7 in the X-axis direction in response to the interchange, in other words, only by changing an introduction position of the secondary air, the size of each of the regions Ge1, Ge2 can be easily changed.

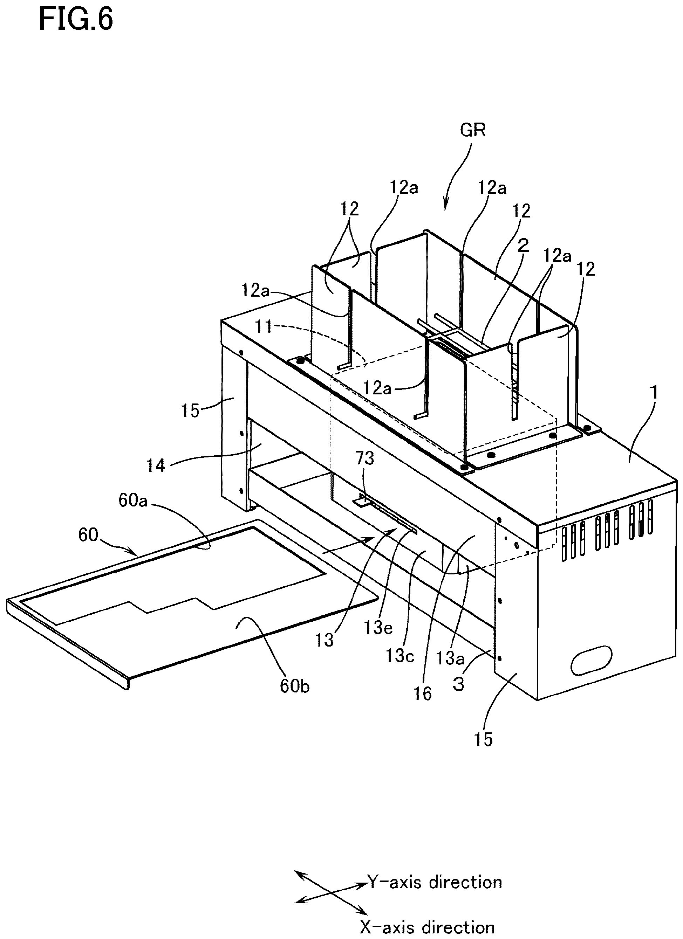

The description has so far been made of the embodiments of the invention but, as long as the technical concept of the invention is not deviated from, various modifications are possible. In the above-mentioned grill-cooking apparatus GR, although the description has been made based on the example in which the closure-changing plate 6, as the introduction-position variable device, is mounted on the lower-end opening 13 of the case 13, the invention is not limited thereto. For example, a configuration may be adopted in which a plurality of introduction holes for introducing the secondary air are provided in the side walls 13a, 13d of the case 13, the side walls facing a space between the burners 4,4 and infrared-radiation members 5, 5, and any one of the introduction holes can be selectively closed. In addition, although the description has been made based on the example in which three kinds of closure-changing plates 6, each having a different closed region, are interchangeably mounted, the invention is not limited thereto. For example, as shown in FIG. 6, a configuration may be adopted in which a single opening part 60a, such as the introduction openings 61a, 61b, 61c of the above-mentioned embodiment connected in the Y-axis direction, is formed in one closure-changing plate 60 that is longitudinal in the Y-axis direction. In this case, if the insertion amount of the closure-changing plate 60 is changed, the size of the closure region 60b is changed.

In the above-mentioned embodiment, the description has been made based on the example in which the single partition plate 7 is provided to divide the surface of the gridiron 2 into two regions, Ge1, Ge2. However, the number of partition plates is not limited thereto. Depending on the closure region 62 of the closure-changing plate 6 (i.e., depending on the number of regions into which the surface of the gridiron 2 is to be divided), partition plates can be appropriately added. On the other hand, in a case where the grill-cooking apparatus is selectively used between a case of grill-cooking in a state where crispness is given to the entire surface of the gridiron by completely closing the lower opening 13b of the case 13, and a case of grill-cooking in a state where moistness is given to the entire surface of the gridiron by completely opening the lower opening 13b of the case 13, the partition plate can be omitted.

In addition, in the above-mentioned grill-cooking apparatus GR, descriptions have been made based on the example in which two independent straight-pipe parts 4a, 4a are used for a burner 4, the invention is not limited thereto. The number of the straight-pipe parts 4a may be three or more, and the invention can be also applied to a burner in which one end of each of the straight-pipe parts 4a, 4a is connected to each other, and to a burner with a circular contour. In addition, although descriptions have been made based on the example in which the gridiron 2 is used for a food mounting part, the food mounting part can be also configured by a metallic plate in which slit holes piercing in perpendicular direction are formed.

### EXPLANATION OF MARKS

- GR: Grill-cooking apparatus
- 13: Case (Constituent element of introduction-changing device)
- 13b: Lower-end opening
- 2: gridiron (Food mounting part)
- 4: Burner
- 4a: Straight-pipe part
- 41: Flame holes
- 6: Closure-changing plate (Introduction-position variable device)
- 61: Introduction opening
- 62: Closed-region
- 7: Partition plate

## Claims

1. A grill-cooking apparatus (GR), comprising:
a burner (4) causing hydrogen gas to combust; and
a food mounting part (2) provided above the burner,
**characterized in that**:
an introduction-position variable device (6) is provided for changing the introduction position of secondary air supplied to the burner.

2. The grill-cooking apparatus as claimed in claim 1, wherein a case (13) is provided that surrounds a portion of the burner, which is located below the food mounting part, and extends downward, and
wherein the introduction-position variable device may be configured by a closure-changing plate (6) mounted on a lower-end opening (13b) of the case so as to be capable of changing a closed region in the lower-end opening.

3. The grill-cooking apparatus as claimed in claim 2, wherein a partition plate (7) is further provided, which divides a space inside the case into a plurality of small spaces extending in perpendicular direction, and
wherein the closure-changing plate is configured to be capable of closing the lower-end opening of the case, which leads to any of the small spaces.
